# EUROPEAN PATENT SPECIFICATION

(11) **EP 2 902 769 B1**
(45) Date of publication and mention of the grant of the patent: **24.11.2021**
(21) Application number: 15152465.9
(22) Date of filing: 26.01.2015
(51) Int. Cl.: G01N 15/14, G01N 15/10, G01N 15/00

(54) **Blood cell analyzer**
Blutzellenanalysegerät
Analyseur de cellules sanguines

(30) Priority: 29.01.2014 JP 2014014337
(43) Date of publication of application: 05.08.2015
(73) Proprietor: SYSMEX CORPORATION, Kobe-shi, Hyogo 651-0073 (JP)
(72) Inventor: Kimura, Konobu, Hyogo, 651-0073 (JP); Uchihashi, Kinya, Hyogo, 651-0073 (JP)
(74) Representative: Hoffmann Eitle

(56) References cited:
- CA-A1- 2 377 602
- US-A- 6 159 740
- US-A1- 2003 235 917
- US-A1- 2006 160 229
- US-A1- 2008 108 103
- US-A1- 2008 180 653
- US-A1- 2008 187 951
- US-A1- 2010 248 300

## Description

### FIELD OF THE INVENTION

The present invention relates to a blood cell analyzer which counts the number of white blood cells in a blood sample.

### BACKGROUND

To date, there have been known blood cell analyzers which mix a blood sample and a reagent to prepare a measurement specimen and count the number of white blood cells in the blood sample, based on the measurement specimen (for example, see Japanese Laid-Open Patent Publication No. 2008-008786 ).

US 2008/180653 A1 relates to a particle analyzer that is capable of classifying and counting particles contained in a sample more accurately. The blood analyzer includes measuring unit for obtaining a plurality of characteristic information of each of particles contained in a sample by measuring a measurement sample prepared from the sample. The blood analyzer includes also data processing unit for obtaining a particle number of a specific kind of particles and each particle number of a plural kinds of particles different from the specific kind of particles, and determining a target kind of particles, whose particle number is corrected, from the plural kinds of particles, based on information obtained by the measuring unit.

US 2008/108103 A1 relates to a cancer/atypical cell discrimination method comprising: measuring a plurality of cells by a flow cytometer, acquiring a scattered light signal for each of the cells, calculating at least one characteristic parameter by analyzing the waveform of the scattered light signal, and discriminating a cancer/atypical cell from the plurality of cells based on the characteristic parameter. One of the characteristic parameters may be a signal width.

Depending on a blood sample, there have been cases where, when the blood sample is mixed with a predetermined reagent and a measurement specimen is prepared, white blood cells aggregate in the measurement specimen. When white blood cells aggregate in a measurement specimen in this manner, aggregated white blood cells composed of a plurality of white blood cells are each counted as one white blood cell. This may cause reduced measurement accuracy in counting of white blood cells.

### SUMMARY

The above problems are overcome by the blood cell analyzer according to claim 1.

According to the blood cell analyzer, in a case where aggregation of white blood cells has occurred in the first measurement specimen in which the first reagent is mixed, the length of the aggregate when passing through the flow cell becomes longer than that of a normal white blood cell. Accordingly, by detecting particles whose first detection signals each have the waveform having the width being greater than or equal to a predetermined value, it is possible to determine whether aggregation of white blood cells has occurred in the first measurement specimen. Then, based on the result of this detection, either one of the first number of white blood cells based on the first measurement specimen and the second number of white blood cells based on the second measurement specimen in which the second reagent different from the first reagent is mixed is outputted to the output means as the number of white blood cells of the blood sample. Here, in a case where aggregation of white blood cells has occurred in the first measurement specimen in which the first reagent is mixed, the second number of white blood cells measured based on the second measurement specimen in which the second reagent different from the first reagent is mixed is to be outputted. Thus, the reliability of the analysis result of the number of white blood cells outputted from the output means can be increased.

### BRIEF DESCRIPTION OF THE DRAWINGS

FIG. 1 is an external view of a blood cell analyzer according to an embodiment;
FIG. 2 is a schematic diagram showing a configuration of a measurement unit according to the embodiment;
FIG. 3 shows the outline of a fluid circuit of the measurement unit according to the embodiment;
FIG. 4A is a schematic diagram showing a configuration of an optical detector according to the embodiment; and FIG. 4B is a schematic diagram showing a configuration of a flow cell according to the embodiment;
FIG. 5 is a block diagram showing a configuration of the measurement unit according to the embodiment;
FIG. 6 is a block diagram showing a configuration of an information processing unit according to the embodiment;
FIG. 7A is a flow chart showing a process performed by the measurement unit according to the embodiment, and FIGS. 7B to 7D each illustrate a characteristic parameter in a signal waveform according to the embodiment;
FIG. 8 is a flow chart showing a process performed by the information processing unit according to the embodiment;
FIGS. 9A to 9D each show a scattergram according to the embodiment;
FIG. 10 shows a configuration of a result screen according to the embodiment; and
FIGS. 11A and 11B show flow charts of processes performed by an information processing unit according to modifications, respectively, and FIGS. 11C to 11E show configurations of a table of a result screen according to modifications.

### DETAILED DESCRIPTION

The present embodiment is a blood cell analyzer for performing tests and analysis regarding blood. Hereinafter, a blood cell analyzer according to the present embodiment will be described with reference to the drawings.

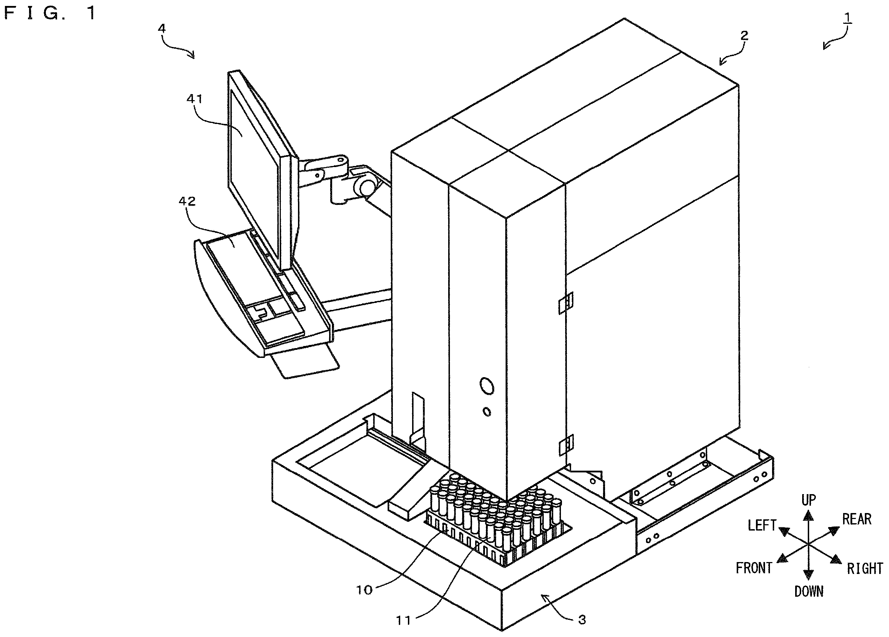

FIG. 1 is an external view of a blood cell analyzer 1 according to the present embodiment.

The blood cell analyzer 1 is a multi-item blood cell analyzer which detects white blood cells, red blood cells, platelets, and the like contained in a blood sample and which counts each blood cell. The blood cell analyzer 1 includes a measurement unit 2, a transporting unit 3 arranged to the front face side of the measurement unit 2, and an information processing unit 4. A blood sample being peripheral blood collected from a patient is contained in a sample container 11. A plurality of sample containers 11 are supported in a sample rack 10, and the sample rack 10 is transported by the transporting unit 3, whereby blood samples are supplied to the measurement unit 2.

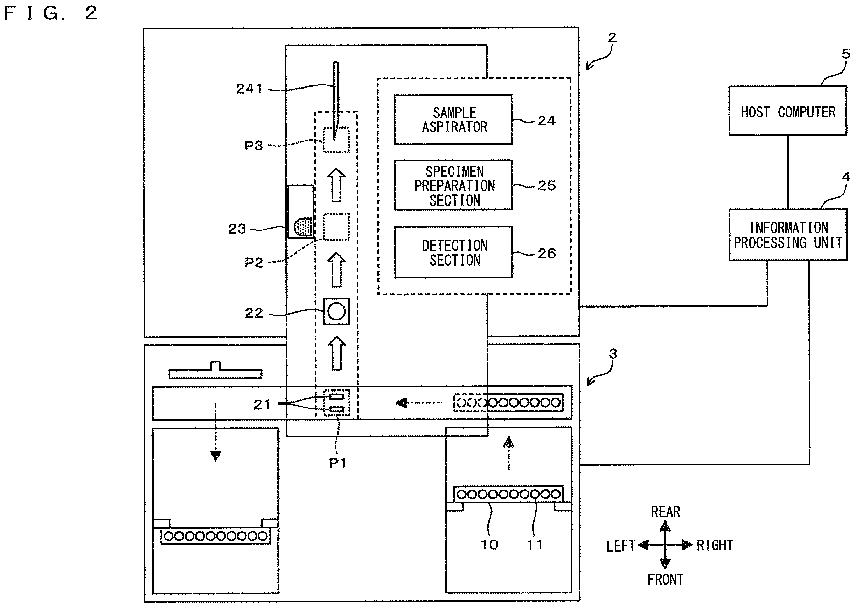

The information processing unit 4 includes an output unit 41 and an input unit 42. The information processing unit 4 is communicably connected to the measurement unit 2, the transporting unit 3, and a host computer 5 (see FIG. 2). In the present embodiment, a display is used as the output unit to output an image. The information processing unit 4 performs analysis based on a result of measurement performed by the measurement unit 2. The information processing unit 4 displays an analysis result to the output unit 41, and also transmits the analysis result to the host computer 5.

FIG. 2 is a schematic diagram showing a configuration of the measurement unit 2.

The measurement unit 2 includes: a hand part 21; a sample container setting part 22; a bar code unit 23; a sample aspirator 24 having a piercer 241; a specimen preparation section 25; and a detection section 26.

A sample container 11 located at a position P1 by the transporting unit 3 is gripped by the hand part 21, to be upwardly pulled out of the sample rack 10. By the hand part 21 being swung, the sample in the sample container 11 is stirred. The sample container 11 for which stirring has been completed is set, by the hand part 21, to the sample container setting part 22 located at the position P1. Then, the sample container 11 is transported to a position P2 by the sample container setting part 22. When sample container 11 is located at the position P2, the bar code unit 23 provided in the vicinity of the position P2 reads a sample number from a bar code label attached to the sample container 11. Then, the sample container 11 is transported by the sample container setting part 22 to a position P3.

When the sample container 11 is located at the position P3, a predetermined amount of the sample is aspirated from the sample container 11 via the piercer 241. After the aspiration of the sample has been completed, the sample container 11 is transported forward by the sample container setting part 22, to be returned to its original support position in the sample rack 10 by the hand part 21. The sample aspirated via the piercer 241 is discharged into various types of reaction chambers in the specimen preparation section 25. The specimen preparation section 25 prepares a measurement specimen by mixing the sample with a reagent, and the detection section 26 detects blood cells from the measurement specimen prepared by the specimen preparation section 25.

The blood cell analyzer 1 of the present embodiment includes a first measurement channel for performing first measurement (WBC/BASO measurement) and a second measurement channel for performing second measurement (DIFF measurement), as measurement of white blood cells contained in a sample.

In general, white blood cell is classified into lymphocyte (LYMPH), monocyte (MONO), and granulocyte (GRAN). Further, granulocyte is classified into neutrophil (NEUT), basophil (BASO), and eosinophil (EO).

The first measurement is measurement of performing demarcation of white blood cells in a sample, and then counting the number of particles of all the white blood cells. Moreover, the first measurement is measurement of demarcating white blood cells into two clusters: i.e., a cluster of basophils; and a cluster of white blood cells excluding basophils, and then counting the number of particles in each cluster.

The second measurement is measurement of demarcating white blood cells in the sample, and then counting the number of particles of all the white blood cells. Moreover, the second measurement is measurement of demarcating white blood cells into four clusters: i.e., a cluster of lymphocytes; a cluster of monocytes; a cluster of eosinophils; and a cluster of neutrophils and basophils, and then counting the number of particles in each cluster.

The blood cell analyzer 1 includes other measurement channels for performing measurement regarding red blood cells, platelets, and the like. However, in the embodiments below, description of those other measurement channels is omitted for convenience, and the first and the second measurement channels are mainly described.

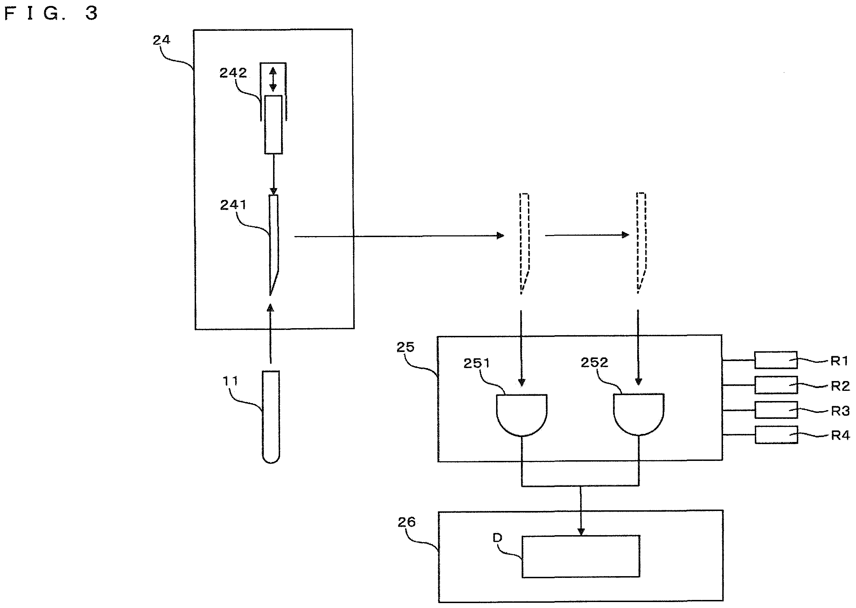

FIG. 3 shows the outline of a fluid circuit of the measurement unit 2.

The sample aspirator 24 includes a syringe pump 242 in addition to the piercer 241 shown in FIG. 2. The specimen preparation section 25 includes: a reaction chamber 251 for preparing a first measurement specimen for performing the first measurement; and a reaction chamber 252 for preparing a second measurement specimen for performing the second measurement. To the specimen preparation section 25, containers respectively containing reagents R1 and R2 to be used in preparation of a first measurement specimen, and containers respectively containing reagents R3 and R4 to be used in preparation of a second measurement specimen are connected. The detection section 26 includes an optical detector D for performing the first and the second measurements.

The sample aspirator 24 applies a negative pressure to the piercer 241 by means of the syringe pump 242, thereby to aspirate a sample via the piercer 241. The sample aspirator 24 discharges the aspirated sample into the reaction chambers 251 and 252.

The specimen preparation section 25 mixes and stirs the sample and the reagents R1 and R2 together in the reaction chamber 251, to prepare a first measurement specimen. The reagent R1 contains a surfactant which hemolyzes red blood cells. As the reagent R1, Lysercell WNR manufactured by Sysmex Corporation is used, for example. The reagent R2 is a stain liquid. As the reagent R2, Fluorocell WNR manufactured by Sysmex Corporation is used, for example.

The specimen preparation section 25 mixes and stirs the sample and the reagents R3 and R4 together in the reaction chamber 252, to prepare a second measurement specimen. The reagent R3 hemolyzes and lyses red blood cells and platelets. In addition, the reagent R3 contains a surfactant for appropriately damaging cell membranes in order to stain nuclei of white blood cells. As the reagent R3, Lysercell WDF manufactured by Sysmex Corporation is used, for example. The reagent R4 is a stain liquid. As the reagent R4, Fluorocell WDF manufactured by Sysmex Corporation is used, for example.

The first measurement specimen and the second measurement specimen prepared in the reaction chambers 251 and 252 are sent to the optical detector D via flow paths. Here, the first measurement specimen and the second measurement specimen are sent to the same optical detector D, but the present embodiment is not limited thereto. A plurality of the optical detectors D may be provided, and the first measurement specimen and the second measurement specimen may be sent to different optical detectors D, respectively.

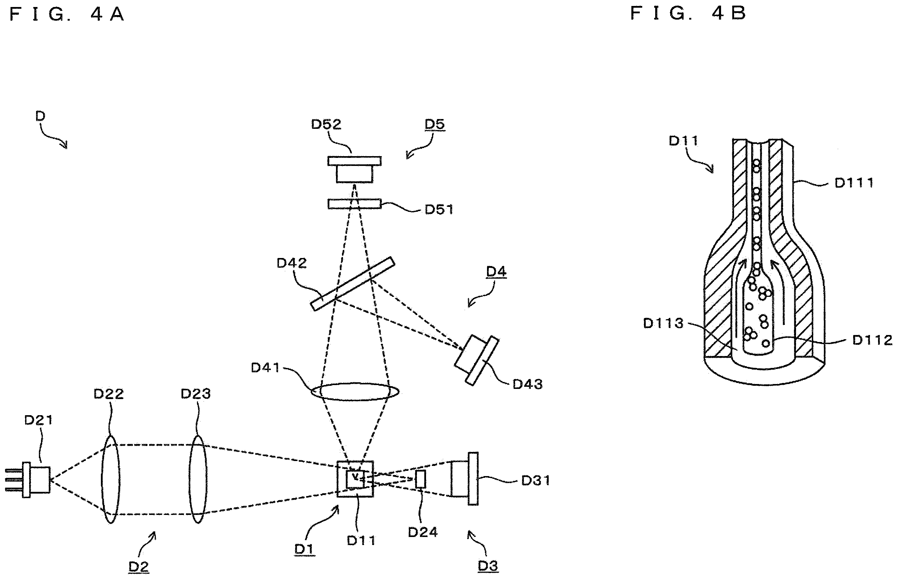

FIG. 4A is a schematic diagram showing a configuration of the optical detector D. The optical detector D includes: a sheath flow system D1 having a flow cell D11; a beam spot forming system D2; a forward scattered light receiving system D3; a side scattered light receiving system D4; and a fluorescence receiving system D5.

FIG. 4B is a schematic diagram showing a configuration of the flow cell D11.

The flow cell D11 is formed in a tube shape by means of a material such as quartz, glass, or synthetic resin having translucency. The inside of the flow cell D11 serves as a flow path through which a measurement specimen and a sheath liquid flow. The flow cell D11 is provided with an orifice Dill whose inner space is made narrower than inner space of the other portion of the flow cell D11. The vicinity of the inlet of the orifice D111 has a double-tube structure, and the inner tube portion thereof serves as a specimen nozzle D112. The outer space of the specimen nozzle D112 serves as a flow path D113 through which a sheath liquid flows. The sheath liquid flows in the flow path D113 to be introduced to the orifice D111.

The sheath liquid supplied to the flow cell D11 flows so as to surround the measurement specimen discharged from the specimen nozzle D112. Then, the flow of the measurement specimen is narrowed by the orifice D111, and blood cell particles contained in the measurement specimen pass the orifice D111 one by one, while being surrounded by the sheath liquid.

With reference back to FIG. 4A, the beam spot forming system D2 is configured such that a laser beam having a wavelength of 633 nm emitted from a light source D21 passes a collimator lens D22 and a condenser lens D23, to irradiate the flow cell D11. Here, as the light source D21, a semiconductor laser is used. Accordingly, each blood cell contained in the fluid flow passing through the flow cell D11 is irradiated with the laser beam. The beam spot forming system D2 also includes a beam stopper D24. The laser beam, of the laser beam emitted to the flow cell D11, that did not strike blood cell particles and passed through the flow cell D11 is blocked by the beam stopper D24.

The forward scattered light receiving system D3 is configured such that forward scattered light that has scattered forward of the flow cell D11 is received by a first light receiving element D31. The first light receiving element D31 is a photodiode. The first light receiving element D31 outputs a forward scattered light signal (FSC) based on the received forward scattered light. The side scattered light receiving system D4 is configured such that side scattered light scattered to sideways of the flow cell D11 is condensed by a side condenser lens D41, and such that a part of the light is reflected by a dichroic mirror D42 to be received by a second light receiving element D43. The second light receiving element D43 is a photodiode. The second light receiving element D43 outputs a side scattered light signal (SSC) based on the received side scattered light. The fluorescence receiving system D5 is configured such that light (fluorescence), of the side scattered light, that has passed through the dichroic mirror D42, is allowed to further pass through a spectrum filter D51 to be received by a third light receiving element D52. The third light receiving element D52 is an avalanche photodiode. The third light receiving element D52 outputs a fluorescence signal (FL) based on the received fluorescence.

Light scattering is a phenomenon that occurs when the advancing direction of light is changed due to the presence of a particle such as a blood cell as an obstacle in the advancing direction of the light. By detecting this scattered light, it is possible to obtain information regarding the size and the material of the particle. Specifically, when a blood cell particle is irradiated with a laser beam, it is possible to obtain, from forward scattered light, information regarding the size of the blood cell particle, and to obtain, from side scattered light, information regarding the inside of the blood cell particle, such as the size of the nucleus. When a blood cell particle stained by a fluorescent substance is irradiated with light, the blood cell particle emits fluorescence having a wavelength longer than the wavelength of the light that irradiated the blood cell particle. The intensity of fluorescence increases when the blood cell particle is well stained. Thus, by detecting this fluorescence, it is possible to obtain information regarding the stained degree of the blood cell particle. In the information processing unit 4, based on the obtained information regarding the blood cell particle, analysis of the sample, such as counting the number of blood cells contained in the measurement specimen, is performed.

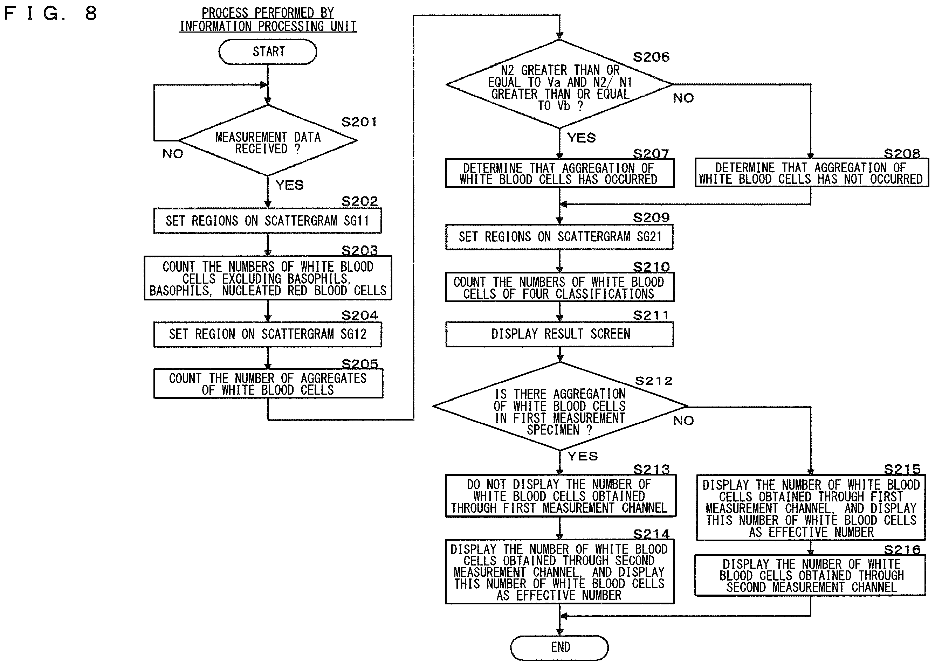

In a case where a blood sample includes hyaluronic acid being a tumor marker of malignant pleural mesothelioma, for example, there are cases where a phenomenon of aggregation of white blood cells occurs in the first measurement specimen. In this case, there is a risk that the number of white blood cells obtained through the first measurement channel becomes smaller than the actual number of white blood cells contained in the first measurement specimen. Therefore, the inventors have focused on the fact that, when such an aggregate of white blood cells passes through the flow cell D11, the aggregate exhibits a long shape in the direction of the flow path in the flow cell D11. Then, the inventors have found that it is possible to know whether the phenomenon of aggregation of white blood cells has occurred in the first measurement specimen. The specific procedure for determining whether the phenomenon of aggregation of white blood cells has occurred in the first measurement specimen will be described later with reference to FIG. 8.

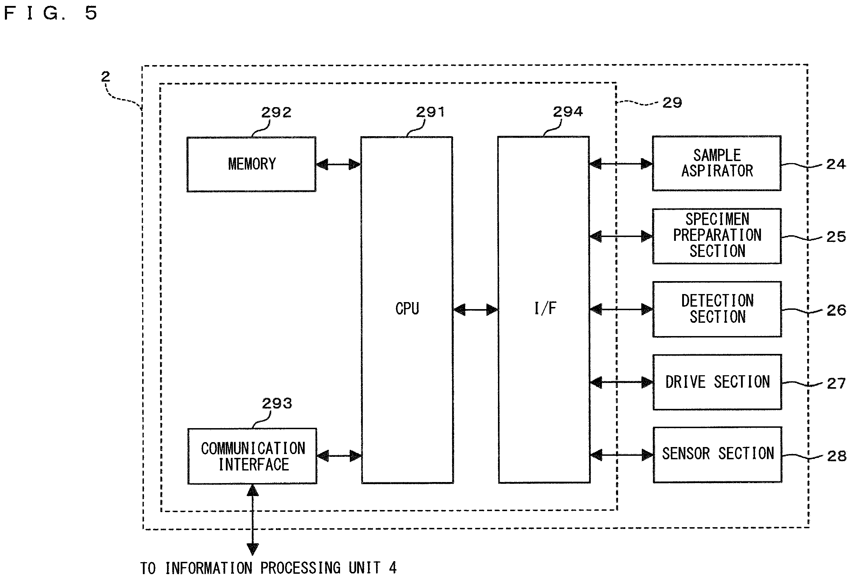

FIG. 5 is a block diagram showing a configuration of the measurement unit 2.

The measurement unit 2 includes the sample aspirator 24, the specimen preparation section 25, and the detection section 26 shown in FIG. 2, and in addition, a drive section 27, a sensor section 28, and a substrate 29. The drive section 27 includes the sample container setting part 22 shown in FIG. 2, and mechanisms and the like in the measurement unit 2. The sensor section 28 includes the bar code unit 23 shown in FIG. 2, and sensors for detecting positions of the mechanisms and the like in the measurement unit 2.

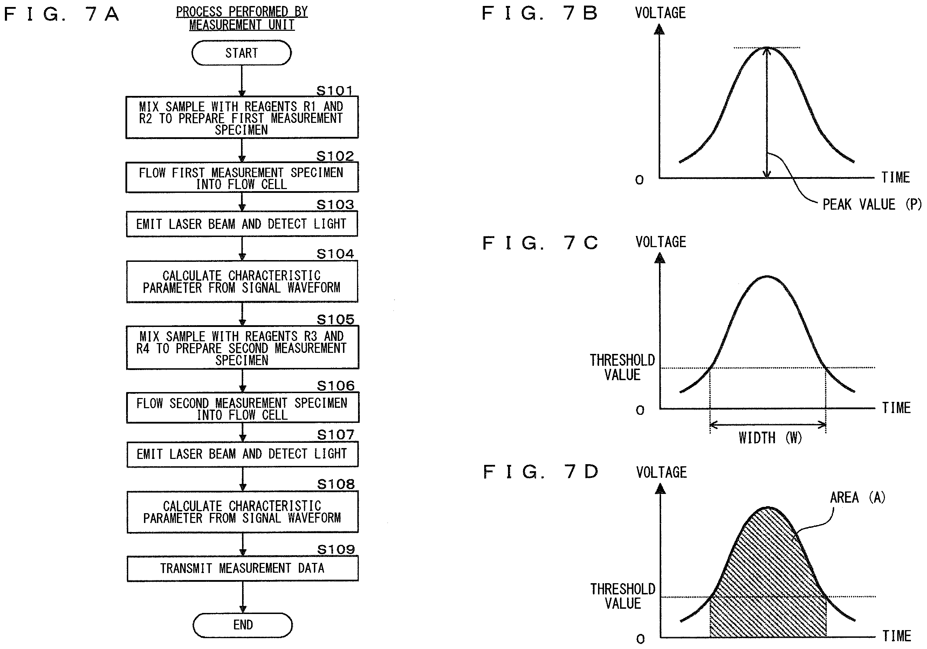

The substrate 29 includes a CPU 291, a memory 292, a communication interface 293, and an interface (I/F) 294. The CPU 291 transmits/receives signals to/from the information processing unit 4 via the communication interface 293. The CPU 291 drives sections of the measurement unit 2 and receives signals outputted from the sections, via the interface 294. The CPU 291 obtains characteristic parameters from the forward scattered light signal (FSC), the side scattered light signal (SSC), and the fluorescence signal (FL) obtained from each particle in the measurement specimen by the detection section 26. The CPU 291 stores these characteristic parameters in the memory 292. The characteristic parameters will be described later, with reference to FIGS. 7B to 7D.

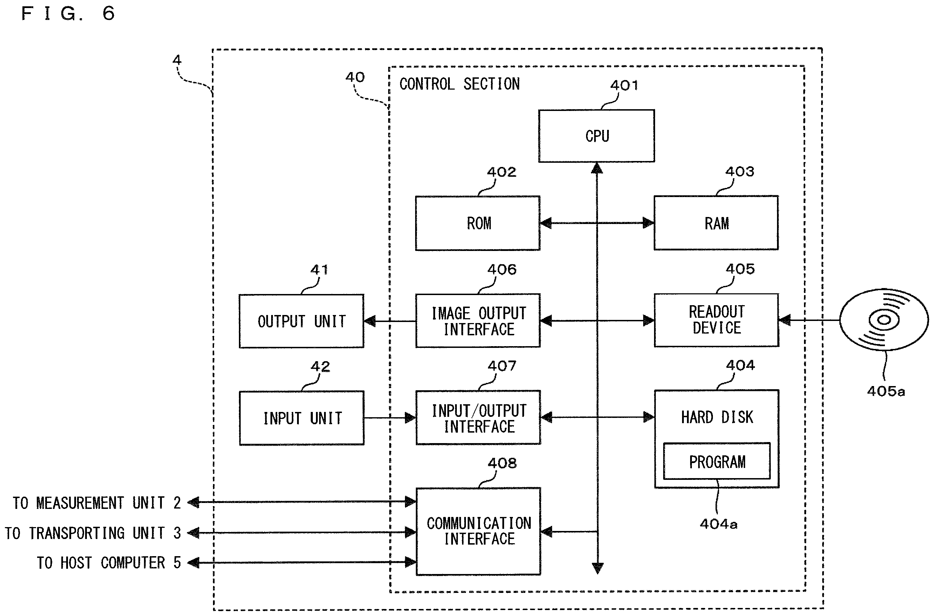

FIG. 6 is a block diagram showing a configuration of the information processing unit 4.

The information processing unit 4 is implemented by a personal computer, for example. The information processing unit 4 is composed of a control section 40, the output unit 41, and the input unit 42. The control section 40 includes a CPU 401, a ROM 402, a RAM 403, a hard disk 404, a readout device 405, an image output interface 406, an input/output interface 407, and a communication interface 408.

The CPU 401 executes computer programs stored in the ROM 402, and computer programs loaded onto the RAM 403. The RAM 403 is used for reading out computer programs stored in the ROM 402 and the hard disk 404.

In the hard disk 404, an operating system, a computer program 404a to be executed by the CPU 401, and data to be used in execution of the computer program are stored. Also, in the hard disk 404, data received from the measurement unit 2 and results of analysis performed based on the received data are stored.

The readout device 405 is composed of a CD drive, a DVD drive, or the like. The readout device 405 can read out computer programs and data stored in a storage medium 405a. In a case where the program 404a is stored in the storage medium 405a, the program 404a is read out by the readout device 405 from the storage medium 405a to be stored in the hard disk 404.

The image output interface 406 outputs an image signal corresponding to image data to the output unit 41. The output unit 41 displays an image based on the image signal. When an operator inputs an instruction via the input unit 42, the input/output interface 407 receives the inputted signal. The communication interface 408 is connected to the measurement unit 2, the transporting unit 3, and the host computer 5, and the CPU 401 transmits/receives instruction signals and data with these, via the communication interface 408.

FIG. 7A is a flow chart showing a process performed by the measurement unit 2.

When receiving an instruction to start measurement from the information processing unit 4, the measurement unit 2 aspirates a sample from a sample container 11. Then, the measurement unit 2 mixes the aspirated sample with the reagents R1 and R2, to prepare a first measurement specimen (S101). Then, the measurement unit 2 flows the first measurement specimen into the flow cell D11 (S102). Subsequently, the measurement unit 2 emits a laser beam to the first measurement specimen flowing in the flow cell D11. Then, the measurement unit 2 detects forward scattered light, side scattered light, and fluorescence by means of the first light receiving element D31, the second light receiving element D43, and the third light receiving element D52, respectively (S103).

Based on the received light, the first light receiving element D31, the second light receiving element D43, and the third light receiving element D52 output a forward scattered light signal (FSC), a side scattered light signal (SSC), and a fluorescence signal (FL), respectively. The measurement unit 2 performs predetermined signal processing on each signal, thereby to obtain a signal waveform corresponding to each light that occurs every time a particle passes through the flow cell D11. That is, a signal waveform corresponding to each light is obtained for each particle, such as a red blood cell, a white blood cell, or the like contained in the measurement specimen.

Subsequently, from the obtained signal waveforms, the measurement unit 2 calculates a plurality of characteristic parameters such as a peak value (intensity), a width, an area, and the like corresponding to each of the forward scattered light, the side scattered light, and the fluorescence (S104). As shown in FIG. 7B, a peak value (P) is the maximum value of the signal waveform. As shown in FIG. 7C, a width (W) is the width of the portion of the signal waveform where the voltage value is greater than a predetermined threshold value. As shown in FIG. 7D, an area (A) is the area of the portion surrounded by the signal waveform and line segments extended downwardly from points where the signal waveform crosses the predetermined threshold value line. The characteristic parameters of each light calculated in this manner are stored in the memory 292.

Next, the measurement unit 2 mixes the aspirated sample with the reagents R3 and R4 to prepare a second measurement specimen (S105). The measurement unit 2 flows the second measurement specimen into the flow cell D11 (S106). Subsequently, the measurement unit 2 emits a laser beam to the second measurement specimen flowing in the flow cell D11. Then, the measurement unit 2 detects forward scattered light, side scattered light, and fluorescence by means of the first light receiving element D31, the second light receiving element D43, and the third light receiving element D52, respectively (S107).

The measurement unit 2 performs predetermined signal processing on a forward scattered light signal (FSC), a side scattered light signal (SSC), and a fluorescence signal (FL) which have been outputted, thereby to obtain signal waveforms corresponding to each light that occurs every time a particle passes through the flow cell D11. Subsequently, from the obtained signal waveforms, the measurement unit 2 calculates a plurality of characteristic parameters corresponding to the forward scattered light, the side scattered light, and the fluorescence (S108). The calculated characteristic parameters of each light are stored in the memory 292.

Thereafter, the measurement unit 2 transmits, to the information processing unit 4, measurement data including the characteristic parameters of each light obtained for each particle based on the first measurement specimen, and the characteristic parameters of each light obtained for each particle based on the second measurement specimen (S109). Thus, the process performed by the measurement unit 2 is completed.

FIG. 8 is a flow chart showing a process performed by the information processing unit 4.

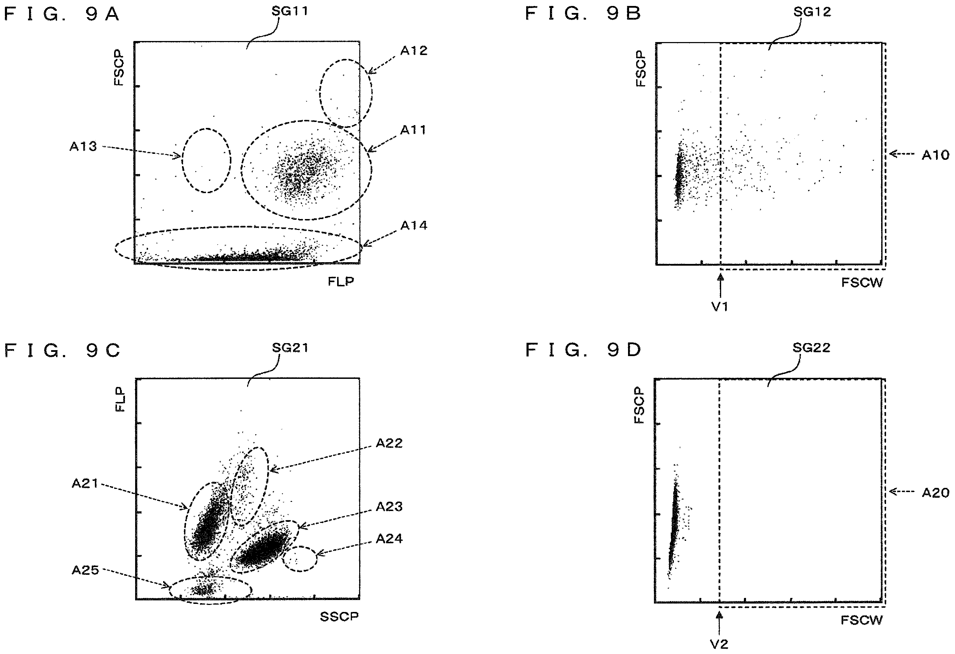

Upon receiving the measurement data via the communication interface 408 (S201: YES), the control section 40 sets regions A11 to A14 on a scattergram SG11 based on the first measurement specimen, in accordance with the measurement data (S202). Specifically, as shown in FIG. 9A, each particle in the first measurement specimen is plotted on the scattergram SG11 whose two axes respectively represent the peak value of fluorescence signal (FLP) and the peak value of forward scattered light signal (FSCP). Accordingly, the regions A11 to A14 are set on the scattergram SG11.

The regions A11 to A14 in FIG. 9A are regions respectively corresponding to: white blood cells excluding basophils (lymphocytes + monocytes + neutrophils + eosinophils); basophils; nucleated red blood cells; and red blood cell ghost composed of hemolyzed red blood cells and the like, which are contained in the first measurement specimen. That is, the regions A11 to A14 are respectively regions that are considered to include: white blood cells excluding basophils; basophils; nucleated red blood cells; and red blood cell ghost composed of hemolyzed red blood cells and the like. The control section 40 counts the numbers of particles included in the regions A11 to A13 set on the scattergram SG11 as the numbers of white blood cells excluding basophils, basophils, and nucleated red blood cell, which are contained in the first measurement specimen, respectively (S203).

Here, for convenience of description, particles have been plotted on the scattergram SG11, and the number of particles included in each of the regions A11 to A13 set on the scattergram SG11 has been counted. However, the scattergram SG11 and the regions A11 to A13 are not necessarily created as diagrams or graphs. Counting of the number of particles included in each of the regions A11 to A13 may be performed through data processing in which only particles belonging to a specific numerical range are extracted through filtering and then counted. Similarly, scattergrams SG12, SG21, and SG22 to be described later, and regions A10, A21 to A24, and A20 set thereon are not necessarily created as diagrams or graphs. Counting of the number of particles included in each of the regions A10, A21 to A24, and A20 may be performed through data processing.

When aggregation of white blood cells occurs in the first measurement specimen as described above, there is a risk that the total of the number of particles included in the regions A11 and A12 set on the scattergram SG11 and considered as white blood cells based on the first measurement specimen becomes smaller than the actual number of white blood cells contained in the first measurement specimen. Thus, in the present embodiment, it is determined whether aggregation of white blood cells has occurred in the first measurement specimen, as shown below.

The control section 40 extracts particles included in the regions A11 and A12 of the scattergram SG11, and sets a region A10 on a scattergram SG12 based on the extracted particles (S204). Specifically, as shown in FIG. 9B, the particles included in the regions A11 and A12 are plotted on the scattergram SG12 whose two axes respectively represent the width of forward scattered light signal (FSCW) and the peak value of forward scattered light signal (FSCP). Accordingly, the region A10 is set on the scattergram SG12.

The region A10 in FIG. 9B is a region corresponding to aggregates of white blood cells that have occurred in the first measurement specimen. That is, the region A10 is a region that is considered to include aggregates of white blood cells. Specifically, the region A10 is a region on the scattergram SG12 in which the value of FSCW is greater than or equal to V1 and less than or equal to the maximum value, and in which the value of FSCP is greater than or equal to the minimum value and less than the maximum value. It should be noted that the scattergram SG12 shown in FIG. 9B indicates a state where aggregation of white blood cells has occurred in the first measurement specimen. In consideration of the speed and the like of the first measurement specimen flowing in the flow cell D11, the value V1 is set in advance such that the region A10 includes aggregates of white blood cells. The reason why the value of FSCP is set to be less than the maximum value is to exclude particles whose FSCP value is extremely high. In the present embodiment, in the highest intensity range of FSCP, particles having higher values of FSCP than the maximum value are plotted.

When the region A10 is set in this manner, white blood cells having great FSCW values can be extracted from the entirety of white blood cells. That is, since the FSCW value corresponds to the length of a particle in the direction of the flow path in the flow cell D11, it is possible to narrow down to aggregates of white blood cells having long shapes in the direction of the flow path in the flow cell D11. The control section 40 counts the number of particles included in the region A10 set on the scattergram SG12 as the number of aggregates of white blood cells (S205).

Now, the number of all particles on the scattergram SG12 (the number of particles included in the regions A11 and A12 on the scattergram SG11), i.e., the number of white blood cells obtained through the first measurement channel, is defined as N1, and the number of particles included in the region A10 on the scattergram SG12 is defined as N2.

The control section 40 uses the number of particles N2, and the number of particles N2 / the number of particles N1, as evaluation values. Specifically, the control section 40 determines whether the number of particles N2 is greater than or equal to a value Va and the number of particles N2 / the number of particles N1 is greater than or equal to a value Vb (S206). Upon having determined as YES in S206, the control section 40 determines that aggregation of white blood cells has occurred in the first measurement specimen (S207). Upon having determined as NO in S206, the control section 40 determines that aggregation of white blood cells has not occurred in the first measurement specimen (S208).

Next, in accordance with the measurement data, the control section 40 sets regions A21 to A25 on a scattergram SG21 based on the second measurement specimen (S209). Specifically, as shown in FIG. 9C, each particle in the second measurement specimen is plotted on the scattergram SG21 whose two axes respectively represent the peak value of side scattered light signal (SSCP), and the peak value of fluorescence signal (FLP). Accordingly, the regions A21 to A25 are set on the scattergram SG21.

The regions A21 to A25 in FIG. 9C are regions respectively corresponding to: lymphocytes; monocytes; neutrophils + basophils; eosinophils; and red blood cell ghost composed of hemolyzed red blood cells and the like, which are contained in the second measurement specimen. That is, the regions A21 to A25 are respectively regions that are considered to include: lymphocytes; monocytes; neutrophils + basophils; eosinophils; and red blood cell ghost composed of hemolyzed red blood cells and the like. The control section 40 counts the numbers of particles included in the regions A21 to A24 set on the scattergram SG21 as the numbers of lymphocytes, monocytes, neutrophils + basophils, and eosinophils, which are contained in the second measurement specimen, respectively (S210).

In the second measurement specimen, aggregation of white blood cells that would occur in the first measurement specimen rarely occurs. That is, the possibility is low that the total of the number of particles included in the regions A21 to A24 set on the scattergram SG21 and considered as white blood cells based on the second measurement specimen becomes greatly different from the actual number of white blood cells contained in the second measurement specimen.

FIG. 9D shows a scattergram SG22 created based on particles included in the regions A21 to A24 of the scattergram SG21. The two axes of the scattergram SG22 are set similarly to those of the scattergram SG12 in FIG. 9B. The scattergram SG22 is created based on the same sample as the sample in which aggregation of white blood cell has occurred as shown in FIG. 9B.

With reference to FIG. 9D, different from the case of FIG. 9B, there are no particles having great FSCW values, i.e., particles in the region A20 whose FSCW value is greater than or equal to a value V2. From this, it is seen that the possibility of occurrence of aggregation of white blood cells in the second measurement specimen is low even when aggregation of white blood cells has occurred in the first measurement specimen.

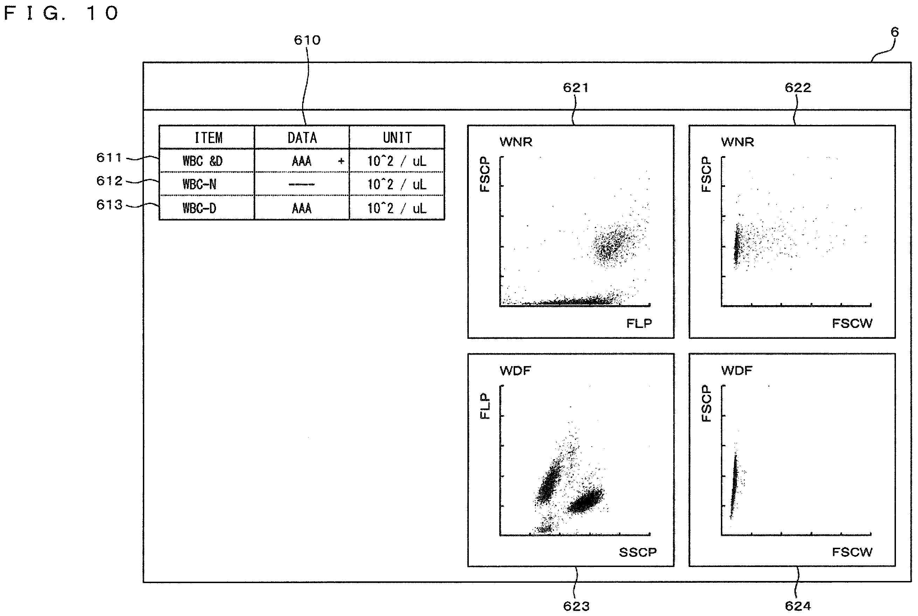

With reference back to FIG. 8, next, the control section 40 displays a result screen 6 on the output unit 41 (S211). The result screen 6 will be described later with reference FIG. 10. Then, the control section 40 displays the number of white blood cells on the result screen 6, based on the result of determination in S207 or S208, i.e., based on whether aggregation of white blood cells has occurred in the first measurement specimen.

When there is aggregation of white blood cells in the first measurement specimen (S212: YES), the control section 40 does not display, on the result screen 6, the number of white blood cells obtained through the first measurement channel, i.e., the total of the numbers of particles included in the respective regions A11 and A12 obtained in S203 (S213). Then, the control section 40 displays, on the result screen 6, the number of white blood cells obtained through the second measurement channel, i.e., the total of the numbers of particles included in the respective regions A21 to A24 obtained in S210, and the control section 40 displays the number of white blood cells as an effective number of white blood cells of the sample on the result screen 6 (S214).

On the other hand, when there is no aggregation of white blood cells in the first measurement specimen (S212: NO), the control section 40 displays the number of white blood cells obtained through the first measurement channel on the result screen 6, and the control section 40 displays this number of white blood cells as an effective number of white blood cells of the sample on the result screen 6 (S215). Then, the control section 40 displays the number of white blood cells obtained through the second measurement channel on the result screen 6 (S216). Then, the process performed by the information processing unit 4 is completed.

Here, in the second measurement channel, since nucleated red blood cells are distributed in the vicinity of the region A21, there are cases where nucleated red blood cells are included in particles considered as white blood cells in the second measurement channel. On the other hand, in the first measurement channel, due to the characteristics of the reagents R1 and R2 that are used, nucleated red blood cells can be demarcated from white blood cells, as shown in the regions A11 and A12, and the region A13. Accordingly, the number of white blood cells obtained through the first measurement channel is more accurate than the number of white blood cells obtained through the second measurement channel. Therefore, in the present embodiment, in a case where there is no aggregation of white blood cells in the first measurement specimen, as shown in S215, the number of white blood cells obtained through the first measurement channel is displayed as an effective number of white blood cells.

In the second measurement channel, influence of nucleated red blood cells on the regions A21 to A24 which correspond to white blood cells is comparatively small. Thus, the number of white blood cells obtained through the second measurement channel is more accurate than the number of white blood cells obtained through the first measurement channel when there is aggregation of white blood cells. Therefore, in the present embodiment, in a case where there is aggregation of white blood cells in the first measurement channel, as shown in S214, the number of white blood cells obtained through the second measurement channel is displayed as an effective number of white blood cells.

On the output unit 41, the numbers of white blood cells of five classifications are displayed as appropriate. Specifically, in S203 and S210, the numbers of white blood cells of two classifications (lymphocyte + monocyte + neutrophil + eosinophil, and basophil) obtained through the first measurement channel, and the numbers of white blood cells of four classifications (lymphocyte, monocyte, neutrophil + basophil, and eosinophil) obtained through the second measurement channel are counted. Then, from the number of basophils obtained through the first measurement channel and the number of neutrophils and basophils combined together and obtained through the second measurement channel, the number of neutrophils is calculated. The numbers of white blood cells of five classifications obtained in this manner are displayed separately on the output unit 41 in accordance with a display instruction from the operator.

FIG. 10 shows a configuration of the result screen 6.

A table 610 of the result screen 6 includes lines 611 to 613.

In the lines 612 and 613, the number of white blood cells obtained through the first measurement channel and the number of white blood cells obtained through the second measurement channel are displayed, respectively. In the line 611, an effective number of white blood cells of the sample is displayed. It is assumed that in the example shown in FIG. 10, "AAA" in the data item of each of the lines 611 and 613 indicates a numerical value.

Specifically, in the line 612, when there is aggregation of white blood cells in the first measurement specimen, "----" indicating a non-display state as shown in FIG. 10 (S213 above) is displayed, and when there is no aggregation of white blood cells in the first measurement specimen, the number of white blood cells obtained through the first measurement channel is displayed (S215 above). In the line 613, the number of white blood cells obtained through the second measurement channel as shown in FIG. 10 is displayed (S214, S216 above). In the line 611, when there is aggregation of white blood cells in the first measurement specimen, the number of white blood cells obtained through the second measurement channel is displayed as an effective number of white blood cells of the sample, as shown in FIG. 10 (S214 above), and when there is no aggregation of white blood cells in the first measurement specimen, the number of white blood cells obtained through the first measurement channel is displayed as an effective number of white blood cells of the sample (S215 above).

In regions 621 to 624 of the result screen 6, the scattergram SG11 of FIG. 9A, the scattergram SG12 of FIG. 9B, the scattergram SG21 of FIG. 9C, and the scattergram SG22 of FIG. 9D are displayed, respectively. By referring to these scattergrams, the operator can also confirm the state of the sample.

As described above, according to the present embodiment, in a case where aggregation of white blood cells has occurred in the first measurement specimen, the length of the aggregate when passing through the flow cell D11 becomes greater than the length of a normal white blood cell. Thus, by counting the number of particles included in the region A10 which is set on the scattergram SG12 such that the width of forward scattered light signal (FSCW) becomes greater than or equal to the value V1, it is possible to determine whether aggregation of white blood cells has occurred in the first measurement specimen. Then, when it is determined that aggregation of white blood cells has occurred based on this counting result, not the number of white blood cells obtained through the first measurement channel but "----" is displayed in the line 612. Accordingly, for example, the operator can know that aggregation of white blood cells has occurred in the measurement specimen, and thus, the number of white blood cells obtained through the first measurement channel is prevented from being used by mistake. Accordingly, the reliability of the number of white blood cells outputted via the output unit 41 from the blood cell analyzer 1 is increased.

According to the present embodiment, in a case where aggregation of white blood cells has occurred in the first measurement channel, then, in the line 611, the number of white blood cells obtained through the second measurement channel is displayed as an effective number of white blood cells of the sample. In a case where aggregation of white blood cells has not occurred in the first measurement channel, then, in the line 611, the number of white blood cells obtained through the first measurement channel is displayed as an effective number of white blood cells of the sample. Accordingly, in the line 611, the number of white blood cells that is highly reliable can be always displayed.

According to the present embodiment, in accordance with the determination in S206, either one of the numbers of white blood cells obtained through the first measurement channel and the second measurement channel is displayed in the line 611. Accordingly, the more appropriate one of the numbers of white blood cells can be outputted as an effective number of white blood cells of the sample. Thus, the reliability of the number of white blood cells to be outputted can be increased.

According to the present embodiment, the value on the vertical axis (FSCP) of the region A10 set on the scattergram SG12 is less than the maximum value of the scattergram SG12. That is, the maximum value of the scattergram SG12 is not included in the region A10. Accordingly, particles whose FSCP value is extremely high are not used in determination of whether aggregation of white blood cells has occurred. Thus, it is possible to appropriately count the number of aggregates of white blood cells occurring in the first measurement specimen.

According to the present embodiment, in the first measurement channel, the scattergram SG11 and the regions A11 and A12 set thereon allow accurate classification of white blood cells and counting of the number of white blood cells. Moreover, in the second measurement channel, the scattergram SG21 and the regions A21 to A24 set thereon allow comparatively accurate classification of white blood cells and counting of the number of white blood cells, although a little less accurate than in counting of the number of white blood cells obtained through the first measurement channel.

According to the present embodiment, it is possible to classify white blood cell into two groups through the first measurement channel, and to count white blood cells in each group. Also, it is possible to classify white blood cells into four groups through the second measurement channel, and to count white blood cells in each group. Accordingly, it is possible to classify white blood cell into five classification items (lymphocyte, monocyte, neutrophil, basophil, eosinophil), and to count white blood cells of each classification.

Although the present embodiment has been described in the above, the embodiment is not limited thereto.

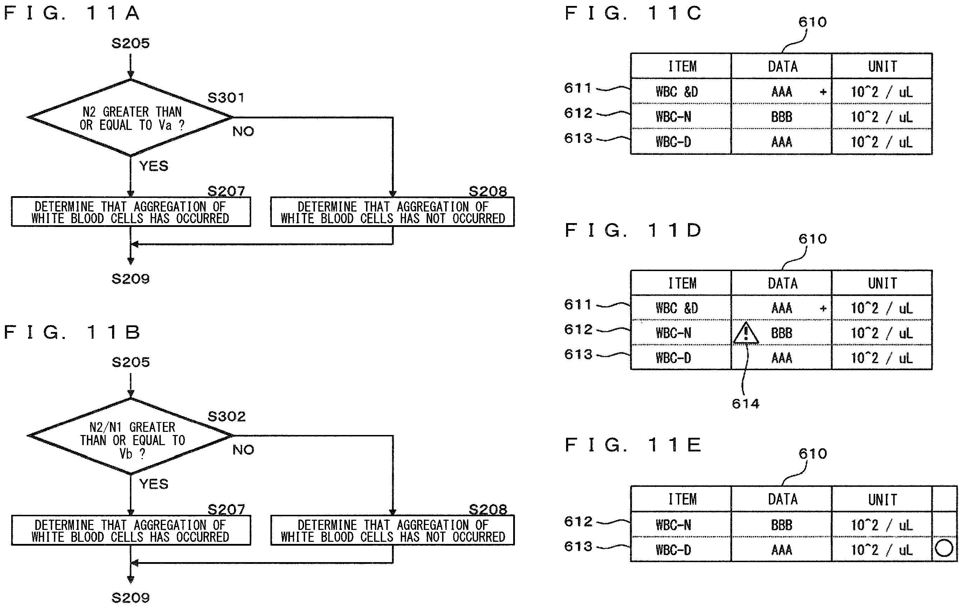

For example, in the above embodiment, determination of whether aggregation of white blood cells has occurred in the first measurement specimen is made in accordance with a condition shown in S206 in FIG. 8. However, the present embodiment is not limited thereto, and the determination may be made in accordance with another condition as shown in FIG. 11A or FIG. 11B.

In FIG. 11A, in the process shown in FIG. 8, S206 is deleted and S301 is added instead. In this case, the control section 40 uses only the number of particles N2 included in the region A10 on the scattergram SG12 shown in FIG. 9B as an evaluation value, and the control section 40 determines whether the number of particles N2 is greater than or equal to the value Va (S301). In FIG. 11B, in the process shown in FIG. 8, S206 is deleted and S302 is added instead. In this case, the control section 40 uses only the ratio of the number of particles N2 in the number of all particles N1 on the scattergram SG12 as an evaluation value, and the control section 40 determines whether the ratio of the number of particles N2 in the number of all particles N1 on the scattergram SG12 is greater than or equal to the value Vb (S302). In either case of FIG. 11A and FIG. 11B, it is possible to determine whether aggregation of white blood cells has occurred in the first measurement specimen.

In a case where the presence/absence of aggregation of white blood cells is to be determined as shown in FIG. 11A, since the number of particles N1 is not used in this determination, there is a risk that an erroneous determination is made when the number of particles N1 is very large, for example. Also, in a case where aggregation of white blood cells is to be determined as shown in FIG. 11B, since the number of particles included in the region A10 is not singly used in this determination, there is a risk that an erroneous determination is made when the number of particles N2 is very small, for example. However, by performing appropriate preparation of the first measurement specimen, it is possible to make appropriate determination even in the case of FIG. 11A and FIG. 11B. From this point of view, it can be said that determination of aggregation of white blood cells preferably involves both conditions of FIG. 11A and FIG. 11B as in the above embodiment. In such a case, the above-described drawbacks in the cases of FIG. 11A and FIG. 11B are eliminated.

In the above embodiment, when aggregation of white blood cells has occurred in the first measurement specimen, "---" indicating the non-display state is displayed in the line 612 of the table 610. However, the present embodiment is not limited thereto, and even when aggregation of white blood cells has occurred in the first measurement specimen, the number of white blood cells obtained through the first measurement channel may be displayed in the line 612 as shown in FIG. 11C. With respect to the example shown in FIG. 11C, it is assumed that "BBB" in the data item of the line 612 indicates a numerical value. Also in this case, by referring to the line 611, the operator can know an effective number of white blood cells of the sample.

In a case where it has been determined that there is aggregation of white blood cells, a symbol 614 may be displayed as shown in FIG. 11D, in order to notify the operator that the reliability of the number of white blood cells obtained through the first measurement channel is low. Alternatively, the line 611 may be deleted from the table 610. In this case, when it has been determined that there is aggregation of white blood cells, a circle may be added at the right end of the line 613 as shown in FIG. 11E, in order to notify the operator that the reliability of the number of white blood cells obtained through the second measurement channel is high compared with the number of white blood cells obtained through the first measurement channel. Alternatively, the display color of the line 612 may be changed to gray when it has been determined that there is aggregation of white blood cells.

As described above, according to the configurations of FIGS. 11C to 11E, the operator can recognize the number of white blood cells having the higher reliability, from among the numbers of white blood cells obtained through the first measurement channel and the second measurement channel, while confirming the numbers of white blood cells obtained through the first measurement channel and the second measurement channel.

In the above embodiment, counting of each blood cell and determination of the presence/absence of aggregation of white blood cells in the measurement specimen are performed by use of the control section 40 of the information processing unit 4. However, the present embodiment is not limited thereto. The above counting and determination may be performed by use of the CPU 291 of the measurement unit 2 or the host computer 5 as a control section.

In the above embodiment, the numbers of white blood cells obtained by the first measurement channel and the second measurement channel, and an effective number of white blood cells of the sample are displayed on the output unit 41. However, the present embodiment is not limited thereto. These numbers of white blood cells may be outputted to the host computer 5 via the communication interface 408. In this case, information to the effect that the reliability of the number of white blood cells obtained through the first measurement channel is low due to occurrence of aggregation of white blood cells in the first measurement specimen is also outputted to the host computer 5. The output unit 41 is not limited to a display, and the output unit 41 may be a printer or a speaker. In this case, the contents of the table 610 on the result screen 6 are outputted from the printer connected to the blood cell analyzer 1, or are outputted as a sound from the speaker connected to the blood cell analyzer 1.

In the above embodiment, the region A10 is set in a rectangular shape on the scattergram SG12. However, the present embodiment is not limited thereto. The region A10 may be set in an elliptical shape, a shape of a parallelogram, or a shape surrounded by straight lines and curves, or the like. Also in this case, preferably, the region A10 is set in a shape being broad in the horizontal axis direction so as to correspond to the distribution of aggregates of white blood cells.

In the above embodiment, the upper limit in the vertical axis direction of the region A10 is set such that the FSCP value is less than the maximum value of the scattergram SG12. However, the present embodiment is not limited thereto. Unless particles having saturated FSCP values pose any problem in particular, the upper limit in the vertical axis direction of the region A10 may be set such that the FSCP value includes the maximum value of the scattergram SG12. When the range in the vertical axis direction of the region A10 is set so as to include both the maximum value and the minimum value of the scattergram SG12 in this manner, a histogram whose horizontal axis represents the width of forward scattered light signal (FSCW), and whose vertical axis represents the frequency of particles may be used, instead of the scattergram SG12. In this case, in S204, the number of particles whose FSCW values are greater than or equal to the value V1 in the histogram is considered as the number of aggregates of white blood cells and counted.

In the above embodiment, determination of whether aggregation of white blood cells has occurred in the first measurement specimen is made based on the width of forward scattered light signal. However, the present embodiment is not limited thereto. It is sufficient that the determination is made based on the width of the signal waveform reflecting the length of a particle in the direction of the flow path in the flow cell D11. For example, as such based on the width of the signal waveform, the area of the portion surrounded by the signal waveform and line segments extended downwardly from points where the signal waveform crosses a predetermined threshold value line set on the signal waveform as shown in FIG. 7D may be used. Alternatively, for example, as the width of the signal waveform, the width of side scattered light signal or the width of fluorescence signal may be used.

In the above embodiment, the scattergram SG11 based on the first measurement specimen is made on the scattergram SG11 whose two axes respectively represent the peak value of fluorescence signal (FLP) and the peak value of forward scattered light signal (FSCP). However, the present embodiment is not limited thereto. Plotting may be performed on the scattergram SG11 whose two axes respectively represent the peak value of side scattered light signal (SSCP) and the peak value of forward scattered light signal (FSCP).

In addition to the above, various modifications of the embodiment can be made as appropriate without departing from the scope of the claims.

## Claims

1. A blood cell analyzer comprising:
specimen preparation means (25) configured to prepare a first measurement specimen by mixing a blood sample with a stain liquid (R2) and a first reagent (R1) containing a surfactant which hemolyzes red blood cells, and configured to prepare a second measurement specimen by mixing the blood sample with a stain liquid (R4) and a second reagent (R3) which is different from the first reagent, and which hemolyzes red blood cells and lyses platelets and which contains a surfactant for appropriately damaging cell membranes in order to stain nuclei of white blood cells;
optical detection means (D) for detecting, by emitting light to each particle contained in each of the first measurement specimen and the second measurement specimen each flowing in a flow cell, light emitted from each particle contained in each of the first measurement specimen and the second measurement specimen, and for outputting first and second detection signals;
a control section (40) for performing first classification regarding white blood cells based on the first detection signals and counting a first number of white blood cells, and for performing second classification regarding white blood cells based on the second detection signals and counting a second number of white blood cells; and
an output unit (41) configured to display a result screen (6), wherein
the control section (40) is configured to set first regions in a first scattergram based on the first measurement specimen representing forward scattered light signal (FSCP), versus fluorescence signal (FLP) or peak value of side scattered light signal (SSCP) versus peak value of forward scattered light signal (FSCP), the first regions corresponding to white blood cells excluding basophils, i.e. lymphocytes + monocytes + neutrophils + eosinophils; and basophils, the control section (40) further being configured to count the first number of white blood cells which is a total number, N1, of white blood cells excluding basophils, and basophils, which are contained in the first measurement specimen corresponding to the first regions;
the control section (40) is further configured to extract particles corresponding to the first regions, the control section (40) is further configured to set second regions in a second scattergram based on the peak value of forward scattered light signal (FSCP) versus the forward scattered light signal (FSCW) of the extracted particles;
the control section (40) is further configured to count a number of particles, N2, having a value of FSCW greater than or equal to a value V1 and less than or equal to the maximum value of FSCW measured, and having a value of FSCP greater than or equal a minimum value and less than a maximum value in the second scattergram as aggregates;
the control section (40) is further configured to determine, if the number of particles N2 is greater than or equal to a value Va and/or the number of particles N2 divided by the number of particles N1 is greater than or equal to a value Vb, that aggregation has occurred in the first measurement specimen, and otherwise, that no aggregation has occurred in the first measurement specimen;
the control section (40) is configured to set third regions in a third scattergram based on the second measurement specimen representing peak value of fluorescence signal (FLP) versus side scattered light signal (SSCP), the third regions corresponding to lymphocytes; monocytes; neutrophils + basophils; and eosinophils; the control section (40) further being configured to count the second number of white blood cells which is a total of the numbers of lymphocytes, monocytes, neutrophils + basophils, and eosinophils, which are contained in the second measurement specimen and corresponding to the third regions;
the control section (40) is further configured to display the result screen (6) on the output unit (41) based on the determination whether aggregation of white blood cells has occurred in the first measurement specimen, and, after determination that aggregation has occurred, the control section (40) is configured to display, on the result screen (6), the second number of white blood cells, as an effective number of white blood cells, and, after determination that aggregation has not occurred, the control section (40) is configured to display the first number of white blood cells, as an effective number of white blood cells, and the second number of white blood cells on the result screen (6).

## Patentansprüche

1. Blutzellenanalysator, der Folgendes umfasst:
ein Präparatzubereitungsmittel (25), das dazu ausgebildet ist, ein erstes Messungspräparat zuzubereiten, indem eine Blutprobe mit einer Färbungsflüssigkeit (R2) und einem ersten Reagenzmittel (R1), das ein Tensid enthält, das rote Blutzellen hämolysiert, gemischt werden, und das dazu ausgebildet ist, ein zweites Messungspräparat zuzubereiten, indem die Blutprobe mit einer Färbungsflüssigkeit (R4) und einem zweiten Reagenzmittel (R3) gemischt wird, das sich von dem ersten Reagenzmittel unterscheidet und das rote Blutzellen hämolysiert und Blättchen lysiert und das ein Tensid enthält, um Zellmembrane entsprechend zu schädigen, um Zellkerne weißer Blutzellen zu färben;
optische Erfassungsmittel (D) zum Erfassen, indem Licht zu jedem Partikel ausgestrahlt wird, das sowohl in dem ersten Messungspräparat als auch dem zweiten Messungspräparat, die jeweils in einer Flusszelle fließen, enthalten ist, von Licht, das von jedem Partikel ausgestrahlt wird, das sowohl in dem ersten Messungspräparat als auch dem zweiten Messungspräparat enthalten ist, und zum Ausgeben erster und zweiter Erfassungssignale;
einen Steuerabschnitt (40) zum Durchführen erster Klassifizierung bezüglich weißer Blutzellen, basierend auf den ersten Erfassungssignalen, und Zählen einer ersten Zahl weißer Blutzellen, und zum Durchführen zweiter Klassifizierung bezüglich weißer Blutzellen, basierend auf den zweiten Erfassungssignalen, und Zählen einer zweiten Zahl weißer Blutzellen; und
eine Ausgabeeinheit (41), die dazu ausgebildet ist, einen Ergebnisbildschirm (6) anzuzeigen, wobei
der Steuerabschnitt (40) dazu ausgebildet ist, erste Bereiche in einem ersten Streudiagramm basierend auf dem ersten Messungspräparat einzustellen, das Vorwärtsstreulichtsignal (FSCP) versus Fluoreszenzsignal (FLP) oder Spitzenwert von Seitenstreulichtsignal (SSCP) versus Spitzenwert von Vorwärtsstreulichtsignal (FSCP) darstellt, wobei die ersten Bereiche weißen Blutzellen außer Basophilen, d.h. Lymphozyten + Monozyten + Neutrophile + Eosinophile; und Basophilen entsprechen, wobei der Steuerabschnitt (40) weiter dazu ausgebildet ist, die erste Zahl weißer Blutzellen, die eine Gesamtzahl, N1, weißer Blutzellen außer Basophilen ist, und Basophile zu zählen, die in dem ersten Messungspräparat entsprechend den ersten Bereichen enthalten sind;
der Steuerabschnitt (40) weiter dazu ausgebildet ist, Partikel entsprechend den ersten Bereichen zu extrahieren,
der Steuerabschnitt (40) weiter dazu ausgebildet ist, zweite Bereiche in einem zweiten Streudiagramm basierend auf dem Spitzenwert von Vorwärtsstreulichtsignal (FSCP) versus dem Vorwärtsstreulichtsignal (FSCW) der extrahierten Partikel einzustellen;
der Steuerabschnitt (40) weiter dazu ausgebildet ist, eine Zahl von Partikeln, N2, die einen FSCW-Wert größer oder gleich einem Wert V1 und kleiner als oder gleich dem Maximalwert von gemessenem FSCW aufweisen und einen FSCP-Wert größer als oder gleich einem Minimalwert und kleiner als einen Maximalwert in dem zweiten Streudiagramm aufweisen, als Aggregate zu zählen;
der Steuerabschnitt (40) weiter dazu ausgebildet ist, zu ermitteln, falls die Zahl von Partikeln N2 größer als oder gleich einem Wert Va ist und/oder die Zahl von Partikeln N2 geteilt durch die Zahl von Partikeln N1 größer als oder gleich einem Wert Vb ist, dass Aggregation in dem ersten Messungspräparat stattgefunden hat, und ansonsten, dass keine Aggregation in dem ersten Messungspräparat stattgefunden hat;
der Steuerabschnitt (40) dazu ausgebildet ist, dritte Bereiche in einem dritten Streudiagramm basierend auf dem zweiten Messungspräparat einzustellen, das Spitzenwert von Fluoreszenzsignal (FLP) versus Seitenstreulichtsignal (SSCP) darstellt, wobei die dritten Bereiche Lymphozyten; Monozyten; Neutrophilen + Basophilen; und Eosinophilen entsprechen;
wobei der Steuerabschnitt (40) weiter dazu ausgebildet ist, die zweite Zahl weißer Blutzellen zu zählen, die eine Summe der Zahlen von Lymphozyten, Monozyten, Neutrophilen + Basophilen, und Eosinophilen ist, die in der zweiten Messungsprobe enthalten sind und den dritten Bereichen entsprechen;
der Steuerabschnitt (40) weiter dazu ausgebildet ist, den Ergebnisbildschirm (6) auf der Ausgabeeinheit (41) basierend auf der Ermittlung anzuzeigen, ob Aggregation weißer Blutzellen in dem ersten Messungspräparat stattgefunden hat, und nach Ermittlung, dass Aggregation stattgefunden hat, der Steuerabschnitt (40) dazu ausgebildet ist, auf dem Ergebnisbildschirm (6) die zweite Zahl weißer Blutzellen als eine effektive Zahl weißer Blutzellen anzuzeigen, und nach Ermittlung, dass Aggregation nicht stattgefunden hat, der Steuerabschnitt (40) dazu ausgebildet ist, die erste Zahl weißer Blutzellen als eine effektive Zahl weißer Blutzellen und die zweite Zahl weißer Blutzellen auf dem Ergebnisbildschirm (6) anzuzeigen.

## Revendications

1. Analyseur de cellules sanguines comprenant :
des moyens de préparation d'échantillon (25) configurés pour préparer un premier échantillon de mesure en mélangeant un échantillon de sang avec un liquide colorant (R2) et un premier réactif (R1) contenant un tensioactif qui hémolyse les globules rouges et configurés pour préparer un second échantillon de mesure en mélangeant l'échantillon de sang avec un liquide colorant (R4) et un second réactif (R3) qui est différent du premier réactif et qui hémolyse les globules rouges et lyse les plaquettes et qui contient un tensioactif pour endommager de manière appropriée des membranes cellulaires afin de colorer les noyaux des globules blancs ;
des moyens de détection optique (D) pour détecter, en émettant de la lumière vers chaque particule contenue dans chacun du premier échantillon de mesure et du second échantillon de mesure circulant chacun dans une cellule d'écoulement, de la lumière émise à partir de chaque particule contenue dans chacun du premier échantillon de mesure et du second échantillon de mesure, et pour délivrer en sortie des premiers et seconds signaux de détection ;
une section de commande (40) pour réaliser une première classification concernant les globules blancs sur la base des premiers signaux de détection et pour compter un premier nombre de globules blancs, et pour réaliser une seconde classification concernant les globules blancs sur la base des seconds signaux de détection et pour compter un second nombre de globules blancs ; et
une unité de sortie (41) configurée pour afficher un écran de résultat (6), dans lequel
la section de commande (40) est configurée pour définir des premières régions dans un premier diagramme de dispersion sur la base du premier échantillon de mesure représentant un signal de lumière diffusée vers l'avant (FSCP) versus un signal de fluorescence (FLP) ou une valeur de crête d'un signal de lumière diffusée sur le côté (SSCP) versus une valeur de crête d'un signal de lumière diffusée vers l'avant (FSCP),
les premières régions correspondant à des globules blancs, à l'exclusion des basophiles, à savoir des lymphocytes + monocytes + neutrophiles + éosinophiles ; et à des basophiles, la section de commande (40) étant en outre configurée pour compter le premier nombre de globules blancs qui est un nombre total, N1, de globules blancs, à l'exclusion des basophiles, et de basophiles qui sont contenus dans le premier échantillon de mesure correspondant aux premières régions ;
la section de commande (40) est en outre configurée pour extraire des particules correspondant aux premières régions,
la section de commande (40) est en outre configurée pour définir des deuxièmes régions dans un deuxième diagramme de dispersion sur la base de la valeur de crête d'un signal de lumière diffusée vers l'avant (FSCP) versus le signal de lumière diffusée vers l'avant (FSCW) des particules extraites ;
la section de commande (40) est en outre configurée pour compter un nombre de particules, N2, présentant une valeur de FSCW supérieure ou égale à une valeur V1 et inférieure ou égale à la valeur maximale de FSCW mesurée, et présentant une valeur de FSCP supérieure ou égale à une valeur minimale et inférieure à une valeur maximale dans le deuxième diagramme de dispersion en tant qu'agrégats ;
la section de commande (40) est en outre configurée pour déterminer, si le nombre de particules N2 est supérieur ou égal à une valeur Va et/ou si le nombre de particules N2 divisé par le nombre de particules N1 est supérieur ou égal à une valeur Vb, qu'une agrégation s'est produite dans le premier échantillon de mesure et, sinon, qu'aucune agrégation ne s'est produite dans le premier échantillon de mesure ;
la section de commande (40) est configurée pour définir des troisièmes régions dans un troisième diagramme de dispersion sur la base du second échantillon de mesure représentant une valeur de crête de signal de fluorescence (FLP) versus un signal de lumière diffusée sur le côté (SSCP), les troisièmes régions correspondant à des lymphocytes ; des monocytes ; des neutrophiles + basophiles ; et des éosinophiles ;
la section de commande (40) est en outre configurée pour compter le second nombre de globules blancs qui est un total des nombres de lymphocytes, de monocytes, de neutrophiles + basophiles, et d'éosinophiles qui sont contenus dans le second échantillon de mesure et correspondant aux troisièmes régions ;
la section de commande (40) est en outre configurée pour afficher l'écran de résultat (6) sur l'unité de sortie (41) sur la base de la détermination pour savoir si une agrégation de globules blancs s'est ou non produite dans le premier échantillon de mesure et, après détermination qu'une agrégation s'est produite, la section de commande (40) est configurée pour afficher, sur l'écran de résultat (6), le second nombre de globules blancs, en tant que nombre effectif de globules blancs, et, après détermination qu'une agrégation ne s'est pas produite, la section de commande (40) est configurée pour afficher le premier nombre de globules blancs, en tant que nombre effectif de globules blancs, et le second nombre de globules blancs sur l'écran de résultat (6).
